# EUROPÄISCHE PATENTSCHRIFT

(11) **EP 4 172 004 B1**
(45) Veröffentlichungstag und Bekanntmachung des Hinweises auf die Patenterteilung: **24.04.2024**
(21) Anmeldenummer: 21727800.1
(22) Anmeldetag: 18.05.2021
(51) Int. Cl.: B60R 13/04

(54) **VERKLEIDUNGSEINRICHTUNG FÜR EINEN SEITENSCHWELLER EINES PERSONENKRAFTWAGENS**
COVER DEVICE FOR A SIDE SILL OF A PASSENGER CAR
DISPOSITIF D'HABILLAGE CONÇU POUR UN LONGERON LATÉRAL D'UNE VOITURE DE TOURISME

(30) Priorität: 25.06.2020 DE 102020003821
(43) Veröffentlichungstag der Anmeldung: 03.05.2023
(73) Patentinhaber: Mercedes-Benz Group AG, 70372 Stuttgart (DE)
(72) Erfinder: HAHN, Samuel, 71034 Böblingen (DE)
(74) Vertreter: Novagraaf Group
(86) Internationale Anmeldenummer: PCT/EP2021/063072
(87) Internationale Veröffentlichungsnummer: WO 2021/259556

(56) Entgegenhaltungen:
- WO-A1-2006/000010
- DE-A1-102017 000 394
- DE-A1-102017 009 030
- DE-A1-102018 001 993
- DE-B3-102018 009 450

## Beschreibung

Die Erfindung betrifft eine Verkleidungseinrichtung für einen Seitenschweller eines Personenkraftwagens gemäß dem Oberbegriff des Anspruchs 1.

Die DE 10 2017 000 803 A1 offenbart eine Verkleidungsanordnung zur Verkleidung eines Karosserieelements eines Fahrzeugs. Außerdem ist der WO 2019/174768 A1 eine Verkleidungseinrichtung für einen Seitenschweller eines Personenkraftwagens als bekannt zu entnehmen, mit einer Schwellerverkleidung, die in einem Längenbereich des Seitenschwellers unterhalb einer Türöffnung angeordnete, beweglich miteinander gekoppelte Verkleidungselemente umfasst. Eine weitere Verkleidungseinrichtung entsprechend dem Oberbegriff des Anspruchs 1 ist in der DE 10 2018 001 993 A1 offenbart.

Aufgabe der vorliegenden Erfindung ist es, eine Verkleidungseinrichtung für einen Seitenschweller eines Personenkraftwagens zu schaffen, so dass ein besonders einfacher und bauraumgünstiger Aufbau der Verkleidungseinrichtung geschaffen werden kann.

Diese Aufgabe wird erfindungsgemäß durch eine Verkleidungseinrichtung mit den Merkmalen des Anspruchs 1 gelöst. Vorteilhafte Ausgestaltungen mit zweckmäßigen Weiterbildungen der Erfindung sind Gegenstand der abhängigen Ansprüche.

Die Erfindung betrifft eine Verkleidungseinrichtung für einen Seitenschweller eines Personenkraftwagens. Der Seitenschweller wird auch als seitlicher Längsträger bezeichnet und ist vorzugsweise Bestandteil eines insbesondere als selbsttragende Karosserie ausgebildeten Aufbaus des Personenkraftwagens. Die Verkleidungseinrichtung weist eine Schwellerverkleidung auf, mittels welcher der Seitenschweller zumindest teilweise verkleidet oder zu verkleiden ist. Die Schwellerverkleidung weist ein erstes Verkleidungselement auf, welches in einem Längenbereich des Seitenschwellers unterhalb einer Türöffnung angeordnet ist. Die Türöffnung ist dabei zumindest teilweise, insbesondere zumindest überwiegend oder vollständig, durch den Aufbau begrenzt. Insbesondere ist die Türöffnung eine seitliche Türöffnung. In vollständig hergestelltem Zustand des Personenkraftwagens ist der Türöffnung eine Tür, insbesondere eine Seitentür, zugeordnet, die im vollständig hergestellten Zustand des Personenkraftwagens bewegbar, insbesondere verschwenkbar, an dem Aufbau gehalten ist. Dabei kann die Tür zwischen einer Schließstellung und wenigstens einer Offenstellung relativ zu dem Aufbau bewegt, insbesondere verschwenkt, werden. In der Schließstellung ist zumindest ein Teilbereich der Türöffnung durch die Tür überdeckt und somit verschlossen. In der Offenstellung gibt die Tür den Teilbereich frei, so dass beispielsweise eine Person über die Türöffnung und somit über den freigegebenen Teilbereich in einen auch als Fahrgastzelle oder Fahrgastraum bezeichneten und durch den Aufbau begrenzten Innenraum des Personenkraftwagens einsteigen und aus dem Innenraum aussteigen kann. Dabei ist die Türöffnung in Fahrzeughochrichtung nach unten hin zumindest teilweise, insbesondere zumindest überwiegend oder vollständig, durch den Seitenschweller und dabei insbesondere durch den genannten Längenbereich des Seitenschwellers begrenzt, so dass sich beispielsweise der genannte Längenbereich in Fahrzeuglängsrichtung zumindest über einen Teil einer in Fahrzeuglängsrichtung verlaufenden Länge der Türöffnung, insbesondere zumindest über die Hälfte oder über mehr als die Hälfte der Länge oder über die gesamte Länge der Türöffnung, erstreckt.

Die Seitenschwellerverkleidung weist außerdem ein in dem Längenbereich des Seitenschwellers unterhalb der Türöffnung angeordnetes zweites Verkleidungselement auf. Da die Verkleidungselemente in dem Längenbereich angeordnet sind, sind die Verkleidungselemente in Fahrzeuglängsrichtung zumindest teilweise, insbesondere zumindest überwiegend oder vollständig, auf Höhe der Türöffnung und dabei in Fahrzeughochrichtung unterhalb der Türöffnung angeordnet.

Die Verkleidungseinrichtung umfasst außerdem eine, insbesondere den Verkleidungselementen gemeinsame, Antriebseinheit, mittels welcher das erste Verkleidungselement um eine erste Schwenkachse und das zweite Verkleidungselement um eine von der ersten Schwenkachse beabstandete und parallel zur ersten Schwenkachse verlaufende, zweite Schwenkachse relativ zu dem Seitenschweller zwischen einer Verkleidungsstellung und einer auch als Einstiegsstellung oder Ausstiegsstellung bezeichneten Komfortstellung verschwenkbar sind. Vorzugsweise sind die Verkleidungselemente auch relativ zueinander zwischen der Verkleidungsstellung und der Komfortstellung verschwenkbar. Da die Verkleidungselemente in dem Längenbereich angeordnet sind, ist zumindest der Längenbereich des Seitenschwellers zumindest in der Verkleidungsstellung mittels der Verkleidungselemente, insbesondere in Fahrzeugquerrichtung nach außen hin und/oder in Fahrzeughochrichtung nach oben hin und/oder in Fahrzeughochrichtung nach unten hin, überdeckt und somit verkleidet. Hierunter ist insbesondere zu verstehen, dass zumindest in der Verkleidungsstellung ein erster Teil des Längenbereichs des Seitenschwellers durch das erste Verkleidungselement, insbesondere in eine erste Richtung, überdeckt und somit verkleidet und ein zweiter Teil des Längenbereichs durch das zweite Verkleidungselement, insbesondere in eine zweite Richtung, überdeckt und somit verkleidet ist, wobei die Richtungen schräg oder parallel zueinander verlaufen können.

Um nun einen besonders einfachen und bauraumgünstigen Aufbau der Verkleidungseinrichtung realisieren zu können, ist es erfindungsgemäß vorgesehen, dass die Antriebseinheit als ein, insbesondere den Verkleidungselementen gemeinsamer, Spindelantrieb ausgebildet ist. Der Spindelantrieb umfasst einen den Verkleidungselementen gemeinsamen Motor, welcher insbesondere als ein Elektromotor ausgebildet sein kann. Der Spindelantrieb umfasst außerdem eine den Verkleidungselementen gemeinsame Spindel, welche mittels des Motors antreibbar und dadurch um eine Spindeldrehachse relativ zu den Verkleidungselementen sowie vorzugsweise relativ zu dem Seitenschweller drehbar ist. Des Weiteren umfasst der Spindelantrieb ein den Verkleidungselementen gemeinsames Mitnehmerelement, welches auf die Spindel aufgeschraubt ist. Hierzu weist die Spindel ein beispielsweise als Außengewinde ausgebildetes erstes Gewinde auf, wobei das Mitnehmerelement beispielsweise ein mit dem ersten Gewinde korrespondierendes und beispielsweise als Innengewinde ausgebildetes zweites Gewinde aufweist. Dabei ist das Mitnehmerelement beispielsweise derart auf die Spindel aufgeschraubt, dass die genannten Gewinde miteinander verschraubt sind. Somit ist beispielsweise das Mitnehmerelement als eine Mutter ausgebildet. Das Mitnehmerelement ist durch relativ zu dem Mitnehmerelement und vorzugsweise um die Spindeldrehachse erfolgendes Drehen der Spindel entlang der Spindel verschiebbar, wodurch die Verkleidungselemente zwischen der Komfortstellung und der Verkleidungsstellung verschwenkbar sind. Mit anderen Worten, das Mitnehmerelement ist beispielsweise gegen um die Spindeldrehachse erfolgende Drehung gesichert oder hinsichtlich um die Drehachse erfolgende Drehungen begrenzt, so dass dann, wenn die Spindel mittels des Motors angetrieben und dadurch um die Spindeldrehachse relativ zu den Verkleidungselementen oder relativ zu dem Seitenschweller gedreht wird, die Spindel um die Spindeldrehachse relativ zu dem Mitnehmerelement gedreht wird. Diese relativ zu dem Mitnehmerelement erfolgende Drehung der Spindel wird mittels der Gewinde in eine translatorische Bewegung des Mitnehmerelements relativ zu der Spindel umgewandelt, so dass beispielsweise dann, wenn die Spindel mittels des Motors in eine erste Drehrichtung um die Spindeldrehachse relativ zu dem Mitnehmerelement gedreht wird, das Mitnehmerelement in eine erste Bewegungsrichtung relativ zu der Spindel und entlang der Spindel verschoben wird. Dabei verläuft beispielsweise die erste Richtung parallel zur Längserstreckungsrichtung der Spindel. Wird die Spindel jedoch mittels des Motors um die Spindeldrehachse in eine der ersten Drehrichtung entgegengesetzte zweite Drehrichtung relativ zu dem Mitnehmerelement gedreht, so wird dadurch das Mitnehmerelement relativ zu der Spindel und entlang der Spindel in eine der ersten Bewegungsrichtung entgegengesetzte zweite Bewegungsrichtung bewegt. Auf diese Weise kann durch entsprechendes Hin- und Herdrehen der Spindel das Mitnehmerelement hin- und herverschoben beziehungsweise translatorisch hin- und herbewegt werden. Beispielsweise werden die Verkleidungselemente aus der Komfortstellung in die Verkleidungsstellung dadurch verschwenkt, dass das Mitnehmerelement in die erste Bewegungsrichtung verschoben wird. Somit werden die Verkleidungselemente beispielsweise dadurch aus der Verkleidungsstellung in die Komfortstellung verschwenkt, dass das Mitnehmerelement in die zweite Bewegungsrichtung verschoben wird. Der Spindelantrieb selbst ist besonders kompakt aufgebaut, so dass ein bauraumgünstiger Aufbau der Verkleidungseinrichtung insgesamt geschaffen werden kann. Außerdem weist der Spindelantrieb einen einfachen und somit robusten Aufbau auf, so dass ein einfacher Aufbau der Verkleidungseinrichtung insgesamt dargestellt werden kann.

Außerdem kann mittels der erfindungsgemäßen Verkleidungseinrichtung ein besonders hoher Komfort, insbesondere beim Ein- und Aussteigen, realisiert werden. Durch Verschwenken der Verkleidungselemente aus der Verkleidungsstellung in die Komfortstellung werden beispielsweise die Verkleidungselemente zumindest teilweise, insbesondere zumindest überwiegend oder vollständig, in Fahrzeugquerrichtung nach innen verschwenkt beziehungsweise bewegt. Insbesondere kann vorgesehen sein, dass eine in der Verkleidungsstellung in Fahrzeughochrichtung obere Kante beziehungsweise ein in der Verkleidungsstellung in Fahrzeughochrichtung oberer Bereich des ersten Verkleidungselements dann, wenn das erste Verkleidungselement aus der Verkleidungsstellung in die Komfortstellung verschwenkt wird, in Fahrzeugquerrichtung nach innen verschwenkt wird. Ferner ist es beispielsweise denkbar, dass eine in der Verkleidungsstellung in Fahrzeughochrichtung untere Kante beziehungsweise ein in der Verkleidungsstellung in Fahrzeughochrichtung unterer Bereich des zweiten Verkleidungselements und/oder eine in der Verkleidungsstellung in Fahrzeugquerrichtung äußere Kante beziehungsweise ein in der Verkleidungsstellung in Fahrzeugquerrichtung äußerer Bereich des zweiten Verkleidungselements dann, wenn das zweite Verkleidungselement aus der Verkleidungsstellung in die Komfortstellung verschwenkt wird, in Fahrzeugquerrichtung nach innen und/oder in Fahrzeughochrichtung nach unten verschwenkt wird. Durch das Verschwenken der Verkleidungselemente aus der Verkleidungsstellung in die Komfortstellung wird beispielsweise ein Raum oder ein Bereich freigegeben, der in der Verkleidungsstellung von den Verkleidungselementen umgeben ist. Durch das Freigeben des genannten Raums kann beispielsweise eine über die Türöffnung aus dem Innenraum aussteigende Person zumindest eines ihrer Beine derart bewegen und positionieren, dass zumindest ein Teil des Beins in dem freigegebenen Raum angeordnet ist beziehungsweise den freigegebenen Raum durchdringt. Dadurch kann die Person besonders einfach und komfortabel aus dem Innenraum aussteigen, insbesondere ohne dass das Bein beziehungsweise eine Hose der Person den Seitenschweller oder die Verkleidungseinrichtung berührt und hierdurch verschmutzt wird.

In vorteilhafter Ausgestaltung der Erfindung ist die Spindel um eine Drehachse relativ zu dem Seitenschweller mit den Verkleidungselementen mit verschwenkbar. Dies bedeutet, dass beim Verschwenken der Verkleidungselemente die Spindel mit verschwenkt wird und sich hierbei um die Drehachse dreht, insbesondere relativ zum Seitenschweller und vorzugsweise auch relativ zu den Verkleidungselementen. Hierdurch können eine einfache Lagerung und eine bauraumgünstige Bewegung der Verkleidungselemente realisiert werden, so dass der Bauraumbedarf der Verkleidungselemente besonders gering und deren Aufbau besonders einfach gehalten werden kann. Um dabei einen besonders einfachen und kompakten Aufbau der Verkleidungseinrichtung zu realisieren, hat es sich als vorteilhaft gezeigt, wenn die Drehachse, welche vorzugsweise parallel zu den Schwenkachsen verläuft, insbesondere in Fahrzeugquerrichtung und/oder in Fahrzeughochrichtung, von den Schwenkachsen beabstandet ist. Vorzugsweise ist die Drehachse in Fahrzeugquerrichtung weiter innen als die Schwenkachsen angeordnet.

Eine weitere Ausführungsform zeichnet sich dadurch aus, dass auch der Motor um die Drehachse relativ zu dem Seitenschweller und vorzugsweise auch relativ zu den Verkleidungselementen mit den Verkleidungselementen und mit der Spindel mit verschwenkbar ist. Dadurch kann eine übermäßig komplexe Kopplung des Motors mit der Spindel beziehungsweise der Spindel mit den Verkleidungselementen vermieden werden, so dass ein besonders einfacher Aufbau darstellbar ist.

Unter den Merkmalen, dass die Spindel beziehungsweise der Motor um die Drehachse relativ zu dem Seitenschweller verschwenkbar ist, kann insbesondere verstanden werden, dass die Spindel beziehungsweise der Motor zumindest mittelbar an dem Seitenschweller um die Drehachse relativ zu dem Seitenschweller drehbar gelagert ist. Dabei ist die Drehachse vorzugsweise bezüglich des Seitenschwellers ortsfest, so dass die Drehachse beim Verschwenken der Verkleidungselemente nicht relativ zu dem Seitenschweller bewegt wird. Alternativ oder zusätzlich ist vorzugsweise die jeweilige Schwenkachse bezüglich des Seitenschwellers ortsfest, so dass beim Verschwenken der Verkleidungselemente eine Relativbewegung zwischen der jeweiligen Schwenkachse und dem Seitenschweller unterbleibt. Des Weiteren kann unter den Merkmalen, dass die Verkleidungselemente um die Schwenkachsen relativ zu dem Seitenschweller verschwenkbar sind, verstanden werden, dass das jeweilige Verkleidungselement um dessen jeweilige Schwenkachse relativ zu dem Seitenschweller verschwenkbar zumindest mittelbar an dem Seitenschweller gelagert ist. Da die Spindel vorzugsweise um die Drehachse relativ zu dem Seitenschweller verschwenkbar ist und sich somit beispielsweise beim Verschwenken der Verkleidungselemente um die Drehachse relativ zu dem Seitenschweller dreht beziehungsweise schwenkt, wird beim Verschwenken der Spindel um die Drehachse beispielsweise die genannte Bewegungsrichtung um die Drehachse relativ zu dem Seitenschweller verschwenkt.

Um auf besonders einfache und bauraumgünstige Weise das Verschwenken der Spindel sowie vorzugsweise auch das Verschwenken des Motors realisieren zu können, ist es bei einer weiteren Ausführungsform der Erfindung vorgesehen, dass die Verkleidungseinrichtung eine Führungskulisse aufweist, mittels welcher das Mitnehmerelement und über dieses die Spindel bei dem entlang der Spindel erfolgenden Verschieben des Mitnehmerelements zwangsgeführt ist. Hierdurch resultiert aus dem entlang der Spindel erfolgenden Verschieben des Mitnehmerelements das Verschwenken der Spindel und vorzugsweise auch des Motors um die Drehachse. Mit anderen Worten, durch die Zwangsführung kommt beispielsweise dann, wenn das Mitnehmerelement entlang der Spindel verschoben wird, das Mitnehmerelement zumindest mittelbar, insbesondere über eine mit dem Mitnehmerelement mitverschiebbare Koppel, in zumindest mittelbare, insbesondere direkte, Stützanlage mit einem jeweiligen Wandungsbereich, welcher die Führungskulisse beispielsweise direkt begrenzt. Die Führungskulisse beziehungsweise der Wandungsbereich verläuft dabei beispielsweise bogenförmig und/oder schräg, insbesondere relativ zur Bewegungsrichtung. Hierdurch wird das Verschieben des Mitnehmerelements entlang der Spindel in eine um die Drehachse und relativ zu dem Seitenschweller erfolgende Schwenkbewegung der Spindel und vorzugsweise auch des Motors umgewandelt, so dass durch die Zwangsführung eine kostengünstige und somit einfache sowie bauraumgünstige Verschwenkung der Spindel und in der Folge der Verkleidungselemente darstellbar ist. Dabei ist es vorzugsweise vorgesehen, dass die Führungskulisse bezüglich des Seitenschwellers ortsfest ist, so dass beim Verschwenken der Verkleidungselemente und somit der Spindel eine Bewegung der Führungskulisse relativ zu dem Seitenschweller unterbleibt.

Eine weitere Ausführungsform sieht ein mit dem Mitnehmerelement verschiebbares Koppelelement vor, welches beispielsweise die zuvor genannte Koppel ist. Das Koppelelement ist mit einem der Verkleidungselemente, insbesondere gelenkig, gekoppelt. Außerdem durchdringt das Koppelelement eine korrespondierende und als Durchgangsöffnung ausgebildete Koppelkulisse des anderen Verkleidungselements. Dies bedeutet, dass die Koppelkulisse in dem anderen Verkleidungselement beziehungsweise in einer Wandung des Verkleidungselements ausgebildet ist und dabei das andere Verkleidungselement beziehungsweise die Wandung, insbesondere vollständig, durchdringt. Hierdurch ist beispielsweise das Koppelelement auf einer ersten, dem Mitnehmerelement abgewandten Seite des anderen Verkleidungselements mit dem einen Verkleidungselement, insbesondere gelenkig, gekoppelt, wobei das Mitnehmerelement auf einer zweiten, der ersten Seite und beispielsweise auch dem einen Verkleidungselement abgewandten zweiten Seite des anderen Verkleidungselements angeordnet ist und beispielsweise auf der zweiten Seite mit dem Koppelelement gekoppelt beziehungsweise verbunden ist. Dadurch kann ein besonders bauraumgünstiger und einfacher Aufbau realisiert werden.

Dadurch, dass das Koppelelement die Koppelkulisse durchdringt, ist auch das andere Verkleidungselement mit dem Koppelelement gekoppelt, so dass die Verkleidungselemente über das Koppelelement mit dem Mitnehmerelement gekoppelt sind. Insbesondere ist auch das andere Verkleidungselement gelenkig mit dem Koppelelement gekoppelt. Durch die Kopplung der Verkleidungselemente mit dem Koppelelement und über das Koppelelement mit dem Mitnehmerelement sind die Verkleidungselemente über das Koppelelement durch entlang der Spindel erfolgendes Verschieben des Mitnehmerelements mittels des Mitnehmerelements verschwenkbar. Die Kopplung des anderen Verkleidungselements über die Koppelkulisse mit dem Koppelelement kann beispielsweise derart vorgesehen sein, dass dann, wenn das Mitnehmerelement entlang der Spindel verschoben wird, das Koppelelement - während es die Koppelkulisse durchdringt und somit zumindest teilweise in der Koppelkulisse angeordnet ist - in und entlang der Koppelkulisse verschoben wird. Dabei kommt das Koppelelement in zumindest mittelbare, insbesondere direkte, Stützanlage mit wenigstens einem die Koppelkulisse insbesondere direkt begrenzenden Wandungsbereich des anderen Verkleidungselements, so dass dann durch Bewegen beziehungsweise Verschieben des Koppelelements das andere Verkleidungselement verschwenkt wird.

Um den Aufbau der Verkleidungseinrichtung besonders einfach halten zu können, ist es in weiterer Ausgestaltung der Erfindung vorgesehen, dass die Führungskulisse und die Koppelkulisse voneinander getrennte und entlang der jeweiligen Schwenkachse nebeneinander angeordnete Kulissen sind, welche sich beispielsweise gegenseitig zumindest teilweise überlappen. Dabei durchdringen das Koppelelement sowie die Koppelkulisse als auch die Führungskulisse, wodurch das Mitnehmerelement über das Koppelelement mittels der Führungskulisse zwangsgeführt ist.

Bei einer weiteren, besonders vorteilhaften Ausführungsform der Erfindung sind die Verkleidungselemente gegensinnig zwischen der Verkleidungsstellung und der Komfortstellung verschwenkbar, so dass eine besonders bauraumgünstige Verschwenkung des Verkleidungselements dargestellt werden kann. Unter der gleichsinnigen Verschwenkbarkeit beziehungsweise unter dem gleichsinnigen Verschwenken der Verkleidungselemente ist insbesondere zu verstehen, dass beispielsweise das erste Verkleidungselement in eine erste Schwenkrichtung aus der Verkleidungsstellung in die Komfortstellung verschwenkbar ist beziehungsweise verschwenkt wird, wobei das zweite Verkleidungselement in eine zweite, der ersten Schwenkrichtung entgegengesetzte Schwenkrichtung aus der Verkleidungsstellung in die Komfortstellung verschwenkbar ist beziehungsweise verschwenkt wird.

Schließlich hat es sich als besonders vorteilhaft gezeigt, wenn die Schwenkachsen in Fahrzeughochrichtung voneinander beabstandet sind, wodurch ein besonders einfacher und kompakter Aufbau dargestellt werden kann.

Weitere Vorteile und Einzelheiten der Erfindung ergeben sich aus der nachfolgenden Beschreibung sowie anhand der Zeichnung. Dabei zeigt:
- Fig. 1: eine schematische Schnittansicht durch eine Verkleidungseinrichtung und eine Seitentür eines Personenkraftwagens entlang einer in Fahrzeugquerrichtung und in Fahrzeughochrichtung verlaufenden Schnittebene;
- Fig. 2: eine schematische und perspektivische Rückansicht der Verkleidungseinrichtung gemäß einer ersten Ausführungsform, wobei sich Verkleidungselemente der Verkleidungseinrichtung in einer Verkleidungsstellung befinden;
- Fig. 3: eine schematische und perspektivische Rückansicht der Verkleidungseinrichtung, wobei sich die Verkleidungselemente in einer Zwischenstellung zwischen der Verkleidungsstellung und einer Komfortstellung befinden;
- Fig. 4: eine schematische und perspektivische Rückansicht der Verkleidungseinrichtung, wobei sich die Verkleidungselemente in der Komfortstellung befinden;
- Fig. 5: ausschnittsweise eine schematische und perspektivische Rückansicht der Verkleidungseinrichtung, wobei sich die Verkleidungselemente in der Komfortstellung befinden;
- Fig. 6: eine schematische und perspektivische Vorderansicht der Verkleidungseinrichtung gemäß der ersten Ausführungsform, wobei sich die Verkleidungselemente in der Verkleidungsstellung befinden;
- Fig. 7: eine schematische und perspektivische Vorderansicht der Verkleidungseinrichtung, wobei sich die Verkleidungselemente in der Zwischenstellung befinden;
- Fig. 8: eine schematische und perspektivische Vorderansicht der Verkleidungseinrichtung, wobei sich die Verkleidungselemente in der Komfortstellung befinden;
- Fig. 9: ausschnittsweise eine schematische und perspektivische Rückansicht der Verkleidungseinrichtung gemäß einer zweiten Ausführungsform, wobei sich die Verkleidungselemente in der Verkleidungsstellung befinden; und
- Fig. 10: ausschnittsweise eine schematische und perspektivische Rückansicht der Verkleidungseinrichtung gemäß der zweiten Ausführungsform, wobei sich die Verkleidungselemente in der Zwischenstellung befinden.

In den Fig. sind gleiche oder funktionsgleiche Elemente mit gleichen Bezugszeichen versehen.

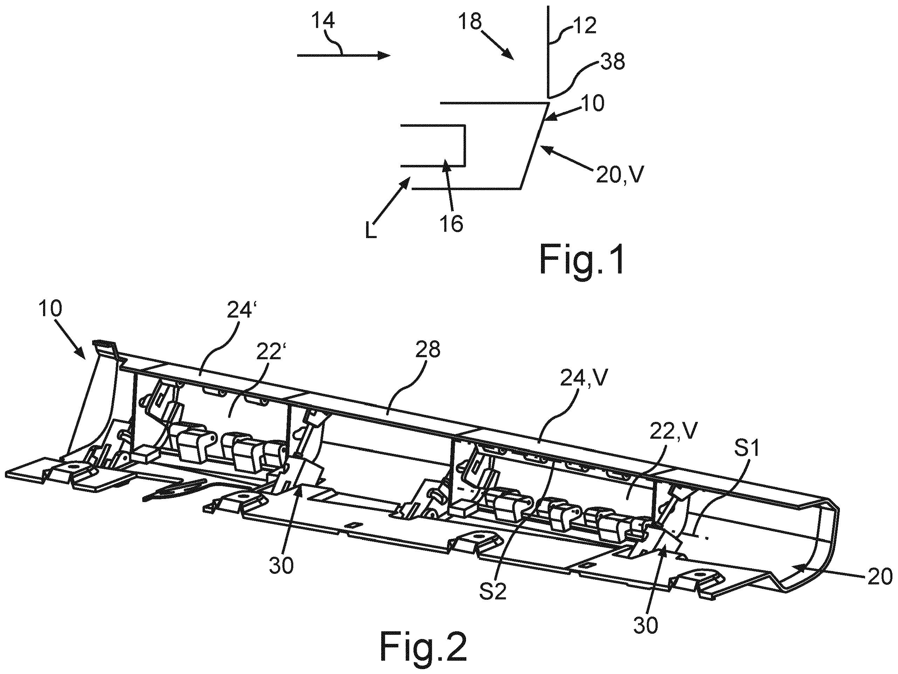

Fig. 1 zeigt ausschnittsweise eine schematische Schnittansicht durch eine Verkleidungseinrichtung 10 und eine als Seitentür 12 ausgebildete Tür eines Personenkraftwagens entlang einer in Fahrzeugquerrichtung und in Fahrzeughochrichtung verlaufenden Schnittebene. Dabei ist die Fahrzeugquerrichtung in Fig. 1 durch einen Pfeil 14 veranschaulicht, welcher vorliegend in Fahrzeugquerrichtung nach außen weist. Dabei weist ein vorzugsweise als selbsttragende Karosserie ausgebildeter Aufbau des Personenkraftwagens Seitenschweller auf, die in Fahrzeugquerrichtung voneinander beabstandet sind. Von diesen Seitenschwellern ist in Fig. 1 ein mit 16 bezeichneter Seitenschweller erkennbar. Außerdem weist der Aufbau wenigstens eine seitliche Türöffnung 18 auf, welche in Fahrzeughochrichtung nach unten hin zumindest teilweise, insbesondere zumindest überwiegend oder vollständig, durch den Seitenschweller 20 begrenzt ist. Es ist erkennbar, dass zumindest ein Längenbereich L des Seitenschwellers 16 in Fahrzeughochrichtung unterhalb der Türöffnung 18 angeordnet ist beziehungsweise verläuft und somit in Fahrzeuglängsrichtung zumindest teilweise, insbesondere zumindest überwiegend oder vollständig, auf gleicher Höhe wie die Türöffnung 18 angeordnet ist. Somit erstreckt sich zumindest ein Teil des in Fahrzeuglängsrichtung verlaufenden Längenbereichs L über zumindest einen Teil einer in Fahrzeuglängsrichtung verlaufenden Erstreckung beziehungsweise Länge der Türöffnung 18. Insbesondere erstreckt sich der Seitenschweller 16 beispielsweise in Fahrzeuglängsrichtung zwischen in Fahrzeuglängsrichtung aufeinanderfolgend beziehungsweise hintereinander angeordneten Radkästen. Beispielsweise bildet der Seitenschweller 20 einen sogenannten Türeinstieg oder ist Bestandteil eines sogenannten Türeinstiegs, über welchen sich eine Person hinweg zu bewegen hat, um aus dem durch den Aufbau begrenzten Innenraum des Personenkraftwagens an dessen Umgebung auszusteigen beziehungsweise aus der Umgebung in den Innenraum einzusteigen.

Wie in Zusammenschau mit Fig. 2 erkennbar ist, umfasst die Verkleidungseinrichtung 10 eine Schwellerverkleidung 20, welche ein in dem Längenbereich L des Seitenschwellers 16 unterhalb der Türöffnung angeordnetes, erstes Verkleidungselement 22 und ein in dem Längenbereich L des Seitenschwellers 16 unterhalb der Türöffnung 18 angeordnetes zweites Verkleidungselement 24 umfasst. Die in Fig. 1 ausschnittsweise erkennbare Türöffnung 18 ist beispielsweise eine vordere Türöffnung, wobei der Aufbau auch eine in Fahrzeuglängsrichtung hinter der vorderen Türöffnung 18 angeordnete, zweite Türöffnung aufweisen kann. Die Türöffnung 18 und die zweite Türöffnung sind beispielsweise auf der in Fahrzeugquerrichtung selben Seite des Aufbaus angeordnet. Dabei umfasst die Schwellerverkleidung 20 ein drittes Verkleidungselement 22' und ein viertes Verkleidungselement 24`, die in einem zweiten Längenbereich des Seitenschwellers 16 unterhalb der zweiten Türöffnung angeordnet sind. Die vorigen und folgenden Ausführungen zum Verkleidungselement 22 können ohne Weiteres auch auf das Verkleidungselement 22' übertragen werden und umgekehrt, wobei die vorigen und folgenden Ausführungen zum Verkleidungselement 24 ohne Weiteres auch auf das Verkleidungselement 24' übertragen werden können und umgekehrt. Vorzugsweise ist es vorgesehen, dass die Verkleidungselemente 22 und 24 die gleiche, in Fahrzeuglängsrichtung verlaufende Länge aufweisen. Außerdem sind die Verkleidungselemente 22 und 24 in Fahrzeuglängsrichtung zumindest teilweise, insbesondere zumindest überwiegend oder vollständig, auf gleicher Höhe angeordnet.

Die Verkleidungseinrichtung 10 umfasst des Weiteren eine den Verkleidungselementen 22 und 22 gemeinsame Antriebseinheit, welche im Folgenden noch genauer erläutert wird. Mittels der Antriebseinheit ist das erste Verkleidungselement 22 um eine vorzugsweise zumindest im Wesentlichen in Fahrzeuglängsrichtung verlaufende erste Schwenkachse S1 relativ zu dem Seitenschweller 16 sowie relativ zu einem fünften Verkleidungselement 28 der Schwellerverkleidung 20 verschwenkbar. Das Verkleidungselement 28 ist bezüglich des Seitenschwellers 16 ortsfest und somit relativ zu dem Seitenschweller 16 unbeweglich. Mit anderen Worten ist das Verkleidungselement 28 ein schwellerfestes Verkleidungselement. Mittels der Antriebseinheit ist das zweite Verkleidungselement 24 um eine zweite Schwenkachse S2 relativ zu dem Verkleidungselement 28 und relativ zu dem Seitenschweller 16 verschwenkbar, wobei die zweite Schwenkachse S2 parallel zur Schwenkachse S1 verläuft und von der Schwenkachse S1 beabstandet ist. Vorzugsweise ist die Schwenkachse S2 zumindest in Fahrzeughochrichtung von der Schwenkachse S1 angeo rdnet.

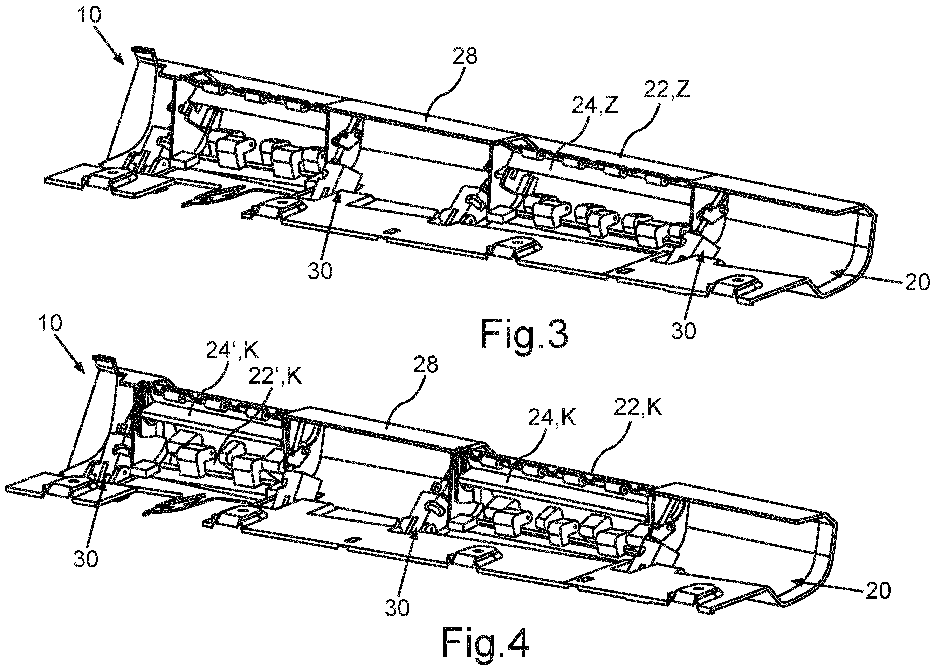

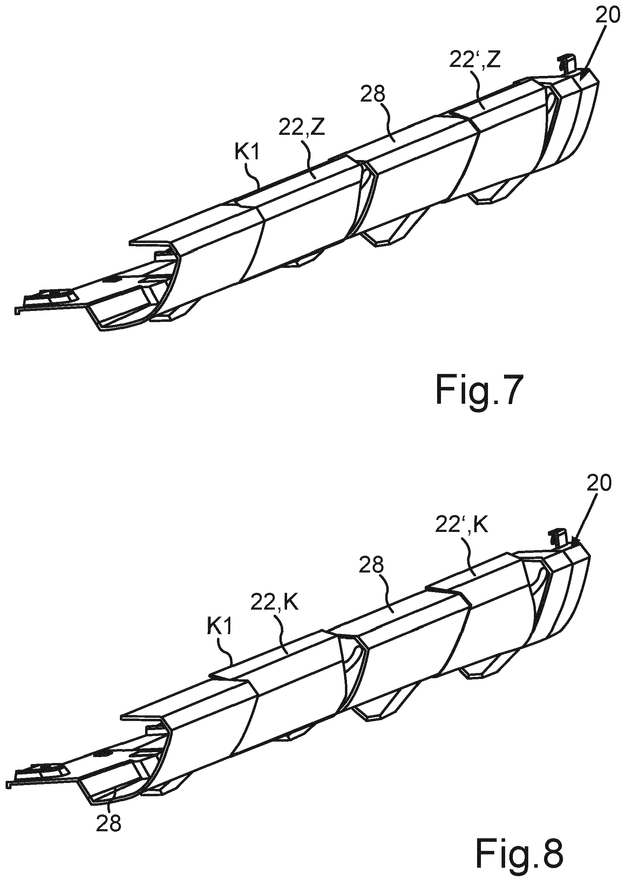

Fig. 2 bis 8 zeigen eine erste Ausführungsform, bei welcher die Schwenkachse S2 in Fahrzeughochrichtung weiter oben angeordnet ist als die Schwenkachse S1. Ferner ist es denkbar, dass die Schwenkachsen S1 und S2 in Fahrzeughochrichtung zueinander versetzt angeordnet sind, so dass beispielsweise die Schwenkachse S2 in Fahrzeughochrichtung weiter innen oder weiter außen angeordnet ist als die Schwenkachse S1. Alternativ dazu ist es denkbar, dass die Schwenkachsen S1 und S2 in Fahrzeughochrichtung auf gleicher Höhe angeordnet sind. Die Schwenkachsen S1 und S2 verlaufen zumindest im Wesentlichen in Fahrzeuglängsrichtung beziehungsweise parallel zur Fahrzeuglängsrichtung. Die Verkleidungselemente 22 und 24 können mittels der Antriebseinheit zwischen einer in Fig. 2 gezeigten Verkleidungsstellung V und einer in Fig. 4 gezeigten Komfortstellung K relativ zu dem Seitenschweller 16 und relativ zu dem schwellerfesten Verkleidungselement 28 verschwenkt werden. Auf ihrem jeweiligen Wert aus der Verkleidungsstellung V in die Komfortstellung K oder umgekehrt aus der Komfortstellung K in die Verkleidungsstellung V kommen die Verkleidungselemente 22 und 24 in mehrere, zwischen der Komfortstellung K und der Verkleidungsstellung V angeordnete Zwischenstellungen. Dabei ist in Fig. 3 eine der Zwischenstellungen gezeigt und mit z bezeichnet.

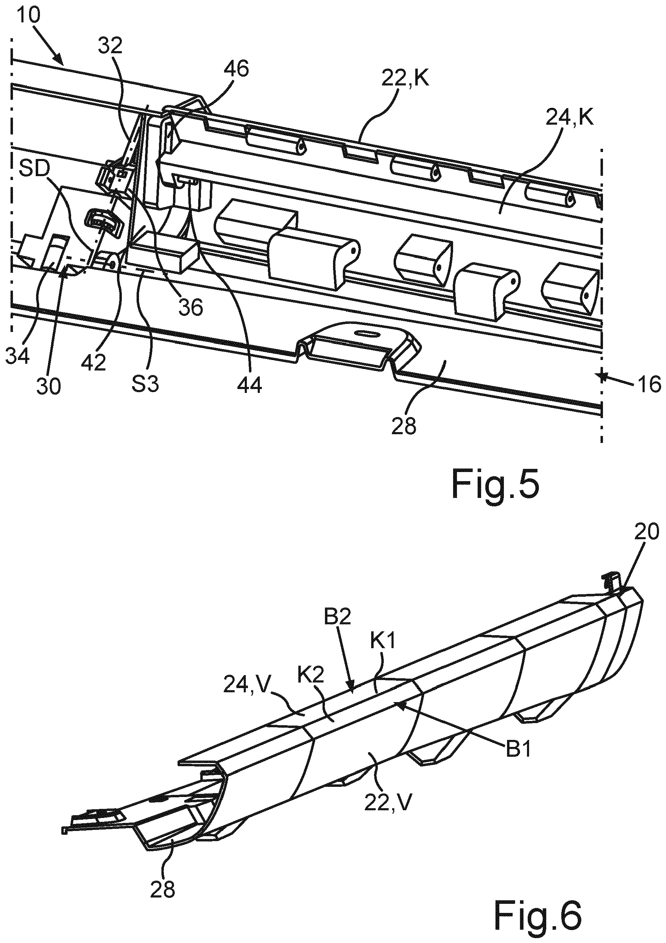

Um nun einen besonders einfachen und bauraumgünstigen Aufbau der Verkleidungseinrichtung 10 realisieren zu können, ist die Antriebseinheit als ein Spindelantrieb 30 ausgebildet. Der Spindelantrieb 30 weist - wie besonders gut aus Fig. 5 erkennbar ist - eine den Verkleidungselementen 22 und 24 gemeinsame Spindel 32 auf, die um eine Spindeldrehachse SD relativ zu den Verkleidungselementen 22 und 24 und 28 und relativ zu dem Seitenschweller 16 drehbar ist. Die jeweilige Schwenkachse S1 beziehungsweise S2 verläuft senkrecht zu einer ersten Ebene, wobei die Spindeldrehachse SD senkrecht zu einer zweiten Ebene verläuft. Dabei verläuft die erste Ebene schräg oder senkrecht zur zweiten Ebene.

Der Spindelantrieb 30 umfasst außerdem einen den Verkleidungselementen 22 und 24 gemeinsamen und vorzugsweise als Elektromotor ausgebildeten Motor 34, mittels welchem die Spindel 32 antreibbar und dadurch um die Spindeldrehachse SD relativ zu den Verkleidungselementen 22, 24 und 28 und relativ zu dem Seitenschweller 16 drehbar ist. Des Weiteren umfasst der Spindelantrieb 30 ein den Verkleidungselementen 22 und 24 gemeinsames Mitnehmerelement 36, welches auf die Spindel 32 aufgeschraubt und somit auf der Spindel 32 angeordnet ist. Außerdem ist beispielsweise das Mitnehmerelement 36 gegen um die Spindeldrehachse SD und relativ zu der Spindel 32 erfolgende Drehungen gesichert oder um die Spindeldrehachse SD und relativ zu der Spindel 32 erfolgende Drehungen des Mitnehmerelements 36 sind zumindest begrenzt, so dass dann, wenn die Spindel 32 mittels des Motors 34 um die Spindeldrehachse SD gedreht wird, das Mitnehmerelement 36 entlang einer Bewegungsrichtung und dabei entlang der Spindel 32 und relativ zur Spindel 32 verschoben wird. Dabei fällt die Bewegungsrichtung mit der Spindeldrehachse SD zusammen. Wird beispielsweise die Spindel 32 mittels des Motors 34 in einer erste Drehrichtung um die Spindeldrehachse SD gedreht, so wird das Mitnehmerelement 36 in eine erste Verschieberichtung relativ zu der Spindel 32 verschoben. Wird beispielsweise die Spindel 32 mittels des Motors 34 in eine der ersten Drehrichtung entgegengesetzte zweite Drehrichtung um die Spiegeldrehachse SD gedreht, so wird dadurch das Mitnehmerelement 36 in eine der ersten Verschieberichtung entgegengesetzte zweite Verschieberichtung relativ zu der Spindel 32 verschoben. Auf diese Weise kann das Mitnehmerelement 36 entlang der Spindel 32 und relativ zu der Spindel 32 hin und her verschoben werden. Die jeweilige Verschieberichtung verläuft dabei parallel zur zuvor genannten Bewegungsrichtung und somit parallel zur Spindeldrehachse SD. Das Mitnehmerelement 36 ist mit den Verkleidungselementen 22 und 24, insbesondere gelenkig, gekoppelt, so dass durch Verschieben des Mitnehmerelements 36 entlang der Spindel 32 die Verkleidungselemente 22 und 24 zwischen der Verkleidungsstellung V und der Komfortstellung K verschwenkbar sind.

Aus Fig. 1 ist erkennbar, dass sich die Schwellerverkleidung 20 in der Verkleidungsstellung V in Fahrzeugquerrichtung so weit nach außen hin erstreckt, dass die Schwellerverkleidung 20 - in geschlossenem Zustand der Seitentür 12, das heißt dann, wenn sich die Seitentür 12 in ihrer Schließstellung befindet - eine zugehörige Türkante 18, welche beispielsweise durch einen Rohbau oder eine Verkleidung, insbesondere Außenverkleidung, der Seitentür 12 gebildet ist, überragt oder zumindest bündig mit der Türkante 38 abschließt. Eine derartige Erstreckung der äußeren Schwellerverkleidung 20 in der Verkleidungsstellung V hat den Vorteil, dass durch die - bezogen auf die Fahrzeugquerrichtung - unterseitige Überdeckung der Türkante 38 beziehungsweise der gesamten Seitentür 12 Beschädigungen durch Steinschläge oder generell Verschmutzungen der Türkante 38 beziehungsweise des gesamten unteren Bereichs der Seitentür 12 vermieden werden können.

Eine solche Erstreckung der Schwellerverkleidung 20 kann jedoch die Problematik eines erschwerten Ein- und Ausstiegs über die Türöffnung 18 in den Personenkraftwagen hinein beziehungsweise aus diesem heraus aufwerfen, und zwar insbesondere für kleinere und/oder ältere Menschen oder für Menschen mit eingeschränkter Mobilität. Diese Problematik kann sich verschärfen, wenn die Seitentür 12 beispielsweise bei beengten Parkverhältnissen nicht weit genug geöffnet werden kann. Insbesondere bei derartigen Situationen kann es zu einem unbequemen Ein- und Ausstieg beziehungsweise zu damit einhergehenden Verschmutzungen der Kleidung, insbesondere der Hosenbeine, kommen.

Die zuvor beschriebene Problematik kann nun jedoch auf besonders einfache und bauraumgünstige Weise vermieden werden. Wie besonders gut aus Fig. 6 bis 8 erkennbar ist, wird dann, wenn die Verkleidungselemente 22 und 24 aus der Verkleidungsstellung V in die Komfortstellung K verschwenkt werden, eine in der Verkleidungsstellung V in Fahrzeughochrichtung obere beziehungsweise oberste Kante K1 beziehungsweise ein in der Verkleidungsstellung V in Fahrzeughochrichtung oberer Bereich B1 des Verkleidungselements 22 in Fahrzeugquerrichtung nach innen verschwenkt, und eine in der Verkleidungsstellung V in Fahrzeugquerrichtung äußere beziehungsweise äußerste Kante K2 beziehungsweise ein in der Verkleidungsstellung V in Fahrzeugquerrichtung äußerer oder äußerster Bereich B2 des Verkleidungselements 24 wird in Fahrzeughochrichtung nach unten sowie in Fahrzeugquerrichtung nach innen verschwenkt. Dadurch geben die Verkleidungselemente 22 und 24 in der Komfortstellung K einen Raum oder Bereich frei, der von den Verkleidungselementen 22 und 24 in der Verkleidungsstellung V umgeben ist. In der Folge kann eine Person zumindest eines ihrer Beine in den in der Komfortstellung K freigegebenen Raum beziehungsweise Bereich hinein bewegen und somit besonders einfach und komfortabel aus dem Personenkraftwagen aussteigen beziehungsweise in den Personenkraftwagen einsteigen. Des Weiteren ist besonders gut aus Fig. 6 erkennbar, dass die Kanten K1 und K2 in der Verkleidungsstellung V, insbesondere direkt, aneinander angrenzen und/oder, insbesondere direkt, aneinander anliegen. Mit anderen Worten sind die Kanten K1 und K2 in der Verkleidungsstellung V einander, insbesondere direkt, zugewandt.

Aus einer Zusammenschau von Fig. 2 bis 4 ist besonders gut erkennbar, dass die Spindel 32 und der Motor 34 um eine auch als dritte Schwenkachse bezeichnete Drehachse S3 relativ zu dem Seitenschweller 16 und relativ zu dem schwellerfesten Verkleidungselement 28 mit den Verkleidungselementen 22 und 24 mit verschwenkbar sind. Bei der ersten Ausführungsform sind die Verkleidungselemente 22 und 24, jeweils für sich alleine betrachtet, um die jeweiligen Schwenkachsen S1 und S2 relativ zu dem Verkleidungselement 28 verschwenkbar an dem Verkleidungselement 28 und über dieses an dem Seitenschweller 16 gelagert. Dabei sind die Spindel 32 und der Motor 34 um die Drehachse S3 relativ zu dem Verkleidungselement 28 verschwenkbar beziehungsweise drehbar an dem Verkleidungselement 28 und über dieses an dem Seitenschweller 16 gelagert. Dabei verläuft die Drehachse S3 parallel zu den Schwenkachsen S1 und S2, wobei die Drehachse S3 von den Schwenkachsen S1 und S2 beabstandet ist, insbesondere in Fahrzeughochrichtung und/oder Fahrzeugquerrichtung. Bei der ersten Ausführungsform ist es vorgesehen, dass die Drehachse S3 in Fahrzeugquerrichtung weiter innen angeordnet ist als die Schwenkachsen S1 und S2.

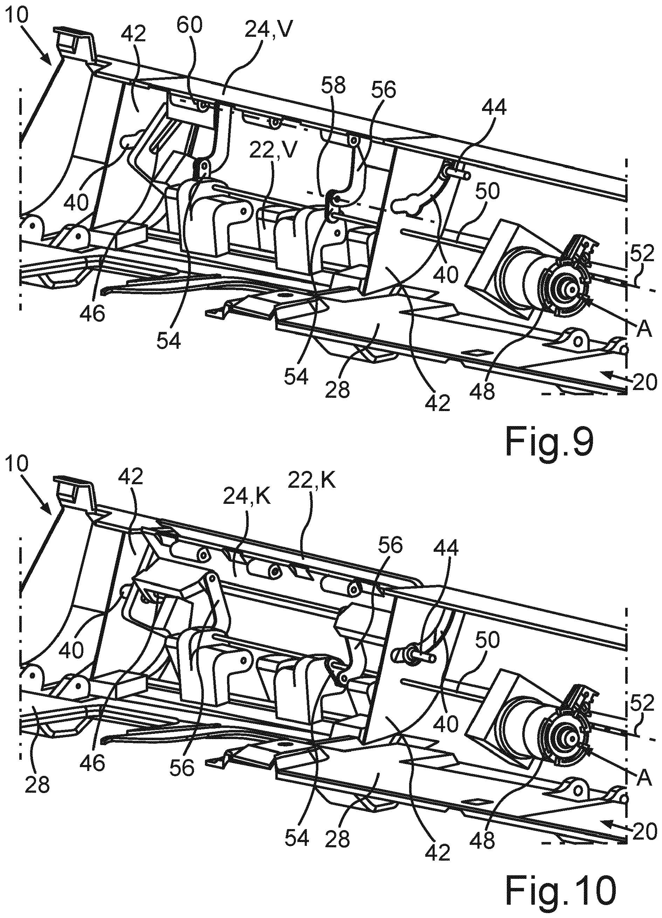

Fig. 9 und 10 zeigen eine zweite Ausführungsform der Verkleidungseinrichtung 10. Die zweite Ausführungsform unterscheidet sich insbesondere in der Antriebseinheit von der ersten Ausführungsform, wobei ansonsten die Ausführungsformen einander entsprechen können. Somit ist besonders gut aus Fig. 9 und 10 erkennbar, dass die Verkleidungseinrichtung 10 eine vorliegend gekrümmte beziehungsweise bogenförmige Führungskulisse 40 aufweist. Die Führungskulisse 40 ist in einer Wandung 42 des schwellerfesten Verkleidungselements 28 ausgebildet und durchdringt die Wandung 42 vollständig, so dass die Führungskulisse 40 eine Durchgangsöffnung beziehungsweise ein Durchgangsschlitz ist. Die Wandung 42 ist ein Steg des Verkleidungselements 28, dessen Steg sich insbesondere zumindest im Wesentlichen flächig in Fahrzeugquerrichtung und in Fahrzeughochrichtung erstreckt. Dabei ist aus Fig. 5 erkennbar, dass das Mitnehmerelement 36 mit einem auch als Koppel bezeichneten Koppelelement 44 verbunden oder gekoppelt ist, so dass das Koppelelement 44 mit dem Mitnehmerelement 36 entlang und relativ zu der Spindel 32 mitverschiebbar ist. Wie im Folgenden noch genauer erläutert wird, sind das Mitnehmerelement 36 und über dieses die Spindel 32 und der Motor 34 über das Koppelelement 44 mittels der Führungskulisse 40 bei dem entlang der Spindel 32 erfolgenden Verschieben des Mitnehmerelements 36 zwangsgeführt, wodurch aus dem entlang der Spindel 32 erfolgenden Verschieben des Mitnehmerelements 36 das Verschwenken der Spindel 32 und des Motors 34 um die Drehachse S3 resultiert. Hierzu greift das Koppelelement 44 in die Führungskulisse 40 ein. Bei der ersten Ausführungsform greift das Koppelelement 44 derart in die korrespondierende Führungskulisse 40 ein, dass das Koppelelement 44 die Führungskulisse 40 durchdringt.

Dabei ist das Koppelelement 44, insbesondere gelenkig, mit dem Verkleidungselement 24 gekoppelt, wodurch durch Verschieben des Mitnehmerelements 36 und des Koppelelements 44 das Verkleidungselement 24 um dessen Schwenkachse S2 relativ zum Verkleidungselement 28 verschwenkt wird. Des Weiteren weist die Verkleidungseinrichtung 10 eine beispielsweise als zweite Führungskulisse ausgebildete Koppelkulisse 46 auf, welche in dem ersten Verkleidungselement 22 ausgebildet ist. Dabei ist die Koppelkulisse 46 in einer Wandung des Verkleidungselements 22 ausgebildet, derart, dass die Koppelkulisse 46 die Wandung und somit das Verkleidungselement 22 durchdringt. Bei dem in den Fig. gezeigten Ausführungsbeispiel ist die Koppelkulisse 46 als Geradführung ausgebildet, welche zumindest einen geraden beziehungsweise geradlinig verlaufenden Führungsabschnitt aufweist, in beziehungsweise entlang welchem das Koppelelement 44 relativ zu dem Verkleidungselement 22 verschiebbar ist. Dabei durchdringt das Koppelelement 44 die Koppelkulisse 46, so dass das Koppelelement 44 auch in die Koppelkulisse 46 eingreift. Hierdurch ist auch das Verkleidungselement 22 mit dem Koppelelement 44 und über dieses mit dem Mitnehmerelement 36 gekoppelt, so dass durch Verschieben des Mitnehmerelements 36 und somit des Koppelelements 44 auch das Verkleidungselement 22 um seine Schwenkachse S1 relativ zu dem Verkleidungselement 28 verschwenkt wird.

Es ist erkennbar, dass die Führungskulisse 40 und die Koppelkulisse 46 voneinander getrennte Kulissen sind, die entlang der jeweiligen Schwenkachse S1 beziehungsweise S2 aufeinanderfolgend beziehungsweise hintereinander angeordnet sind. Dabei ist das Koppelelement 44 auf einer jeweiligen, dem Mitnehmerelement 36 beziehungsweise der Spindel 32 abgewandten ersten Seite des Verkleidungselements 22, insbesondere der Wandung, in welcher die Koppelkulisse 46 ausgebildet ist, und des Stegs, in welchem die Führungskulisse 40 ausgebildet ist, mit dem Verkleidungselement 24 gekoppelt. Die Spindel 32 und das Mitnehmerelement 36 sind auf einer jeweiligen, der jeweiligen ersten Seite abgewandten zweiten Seite des Verkleidungselements 22, insbesondere der genannten Wandung des Verkleidungselements 22, beziehungsweise des Stegs angeordnet. Außerdem ist die Wandung, in welcher die Koppelkulisse 46 ausgebildet ist, entlang der jeweiligen Schwenkachse S1 beziehungsweise S2 zwischen dem Verkleidungselement 24 und dem Steg beziehungsweise zwischen dem Verkleidungselement 24 und dem Mitnehmerelement 36 beziehungsweise der Spindel 32 angeordnet. Hierdurch kann ein besonders einfacher, robuster und bauraumgünstiger Aufbau realisiert werden.

Insbesondere dadurch, dass die Koppelkulisse 46 als Drahtführung ausgebildet ist und dabei jedoch die Spindel 32, den Motor 34 und die Verkleidungselemente 22 und 24 rotatorische Bewegungen, das heißt Schwenkbewegungen, ausführen, wenn die Verkleidungselemente 22 und 24 verschwenkt werden, kann sich beispielsweise folgender Bewegungsablauf ergeben: Das Verkleidungselement 22 wird beispielsweise in eine erste Schwenkrichtung verschwenkt, um das Verkleidungselement 22 aus der Komfortstellung K in die Verkleidungsstellung V zu bewegen. Um das Verkleidungselement 22 aus der Verkleidungsstellung V in die Komfortstellung K zu bewegen beziehungsweise zu verschwenken, wird das Verkleidungselement 22 in eine der ersten Schwenkrichtung entgegengesetzte zweite Schwenkrichtung verschwenkt. Um beispielsweise das Verkleidungselement 24 aus der Komfortstellung K in die Verkleidungsstellung V zu verschwenken, wird das Verkleidungselement 24 in eine dritte Schwenkrichtung verschwenkt. Um das Verkleidungselement 24 aus der Verkleidungsstellung V in die Komfortstellung K zu bewegen beziehungsweise zu verschwenken, wird das Verkleidungselement 24 in eine der dritten Schwenkrichtung entgegengesetzte vierte Schwenkrichtung verschwenkt. Dabei sind die erste Schwenkrichtung und die dritte Schwenkrichtung gegensinnig, und die zweite Schwenkrichtung und die vierte Schwenkrichtung sind gegensinnig. Wird nun ausgehend von der Verkleidungsstellung V die Spindel 32 derart gedreht, dass das Mitnehmerelement 36 derart verschoben wird, dass daraus das Verschwenken der Verkleidungselemente 22 und 24 aus der Verkleidungsstellung V in die Komfortstellung K resultiert, so wird zunächst das Verkleidungselement 22 ausgehend von der Verkleidungsstellung V ein kleines Stück in die erste Schwenkrichtung verschwenkt, und erst danach erfolgt ein Verschwenken des Verkleidungselements 22 in die zweite Schwenkrichtung und somit in die Kontrollstellung K. Dementsprechend wird das Verkleidungselement 24 ausgehend von seiner Verkleidungsstellung V zunächst ein Stück in die dritte Schwenkrichtung geschwenkt, und erst danach erfolgt ein Verschwenken des Verkleidungselements 24 in die vierte Schwenkrichtung und somit in die Komfortstellung K. Entsprechend Umgekehrtes gilt beim Verschwenken der Verkleidungselemente 22 und 24 aus der Komfortstellung K in die Verkleidungsstellung V. Hierzu wird die Spindel 32 derart gedreht, dass das Mitnehmerelement 36 derart verschoben wird, dass daraus das Verschwenken der Verkleidungselemente 22 und 24 in die Verkleidungsstellung V resultiert. Zunächst jedoch wird ausgehend von der Komfortstellung K das Verkleidungselement 22 ein Stück in die zweite Schwenkrichtung geschwenkt, und erst danach erfolgt ein Verschwenken des Verkleidungselements 22 in die erste Schwenkrichtung und somit in die Verkleidungsstellung V. Dementsprechend wird ausgehend von der Komfortstellung K das Verkleidungselement 22 zunächst ein kleines Stück in die vierte Schwenkrichtung verschwenkt, und erst danach erfolgt ein Verschwenken des Verkleidungselements 24 in die dritte Schwenkrichtung und somit in die Verkleidungsstellung V. Somit sind die Verkleidungsstellung V und die Komfortstellung K beispielsweise jeweilige Totpunkte, in welchen die Verkleidungselemente 22 und 24 zum Liegen kommen. Das jeweilige Verkleidungselement 22 beziehungsweise 24 wird jedoch bei seiner jeweiligen Verstellung beziehungsweise Verschwenkung nicht aus dem jeweiligen Totpunkt direkt in die jeweilige Schwenkrichtung und dabei in Richtung des jeweilig anderen Totpunkts geschwenkt, sondern das jeweilige Verkleidungselement 22 beziehungsweise 24 wird ausgehend von dem jeweiligen Totpunkt zunächst ein Stück über den jeweiligen Totpunkt hinaus und dabei von dem jeweils anderen Totpunkt weg bewegt und erst daraufhin wieder auf den jeweiligen Totpunkt zu bewegt, in den jeweiligen Totpunkt bewegt und über den jeweiligen Totpunkt hinaus bewegt und an den jeweils anderen Totpunkt bewegt. Eine jeweilige Stellung, in die das jeweilige Verkleidungselement 22 beziehungsweise 24 beispielsweise über den jeweiligen Totpunkt hinaus bewegt wird, wenn das jeweilige Verkleidungselement 22 beziehungsweise 24 aus dem jeweiligen Totpunkt in den jeweils anderen Totpunkt bewegt wird, wobei das jeweilige Verkleidungselement 22 beziehungsweise 24 in dieser Stellung sozusagen umgekehrt und dann wieder zurück in Richtung des jeweiligen Totpunkts, in den jeweiligen Totpunkt, über den jeweiligen Totpunkt hinaus und schließlich in den jeweils anderen Totpunkt bewegt wird, wird auch als Übertotpunkt oder Übertotpunktlage bezeichnet.

Darüber hinaus ist beispielsweise ein jeweiliger Anschlag vorgesehen, mit dem das jeweilige Verkleidungselement 22 beziehungsweise 24 bei seinem jeweiligen Verschwenken in die Verkleidungsstellung V beziehungsweise in die Komfortstellung K in zumindest mittelbare, insbesondere direkte, Stützanlage kommt. Dies geschieht beispielsweise dann, wenn das jeweilige Verkleidungselement 22 beziehungsweise 24 seine jeweilige Übertotpunktlage oder seinen jeweiligen Totpunkt erreicht. Dadurch können die Verkleidungselemente 22 und 24 sicher in der Verkleidungsstellung V und in der Komfortstellung K gehalten werden.

Die Antriebseinheit wird beispielsweise von der elektronischen Recheneinrichtung des Personenkraftwagens angesteuert, um mittels der Antriebseinheit die Verkleidungselemente 22 und 24 entsprechend zu verschwenken. Dieses Verschwenken der Verkleidungselemente 22 und 24 zwischen der Verkleidungsstellung V und der Komfortstellung K ist beispielsweise Teil einer Komfortfunktion, welche auch umfassen kann, dass ein im Innenraum des Personenkraftwagens angeordnetes Lenkrad, insbesondere zumindest in Fahrzeughochrichtung, verlagert wird, um ein besonders einfaches und komfortables Ein- und Aussteigen zu ermöglichen. Beispielsweise umfasst die Komfortfunktion, dass dann, wenn eine Person in den Personenkraftwagen einsteigen oder aus dem Personenkraftwagen aussteigen möchte, das Lenkrad in Fahrzeughochrichtung nach oben verlagert wird und die Verkleidungselemente 22 und 24 aus der Verkleidungsstellung V in die Komfortstellung K verschwenkt werden. Ist die Person eingestiegen beziehungsweise ausgestiegen, so wird das Lenkrad wieder in Fahrzeughochrichtung nach unten verlagert, und die Verkleidungselemente 22 und 24 werden aus der Komfortstellung K in die Verkleidungsstellung V bewegt.

Wie bereits zuvor erwähnt, unterscheidet sich die zweite Ausführungsform insbesondere in ihrer Antriebseinheit von der ersten Ausführungsform. Bei der zweiten Ausführungsform ist die Antriebseinheit nicht etwa als ein Spindelantrieb ausgebildet, sondern die Antriebseinheit, welche in Fig. 9 und 10 mit A bezeichnet ist, umfasst einen insbesondere als Elektromotor ausgebildeten Motor 48 und eine Antriebswelle 50, welche von dem beispielsweise als Elektromotor ausgebildeten Motor 48 antreibbar und dadurch um eine Antriebsachse 52 relativ zu dem schwellerfesten Verkleidungselement 28 und somit relativ zu dem Seitenschweller 16 drehbar ist. Die Antriebswelle 50 ist, insbesondere drehfest, mit wenigstens einer ersten Koppel 54 gekoppelt, die um die Antriebsachse 52 relativ zu dem Verkleidungselement 28 drehbar ist. Die erste Koppel 54 ist gelenkig mit einer zweiten Koppel 56 gekoppelt, derart, dass die Koppeln 54 und 56 um eine Koppelachse 58 relativ zueinander verschwenkbar sind. Die Koppelachse 58 verläuft parallel zur Antriebsachse 52 und ist von der Antriebsachse 52 beabstandet. Die Antriebsachse 52 und/oder die Koppelachse 58 verlaufen ferner parallel zu den Schwenkachsen S1 und S2. Außerdem sind die Koppelachse 58 und/oder die Antriebsachse 52 von den Schwenkachsen S1 und S2 beabstandet. Die zweite Koppel 56 ist ihrerseits gelenkig mit dem Verkleidungselement 24 gekoppelt, derart, dass die zweite Koppel 56 und das Verkleidungselement 52 um eine zweite Koppelachse 60 relativ zueinander verschwenkbar sind. Die Koppelachse 60 verläuft parallel zur Koppelachse 58 und/oder parallel zur Antriebsachse 52 und/oder parallel zu den Schwenkachsen S1 und S2. Außerdem ist vorzugsweise die Koppelachse 60 von der Schwenkachse S1 und/oder von der Schwenkachse S2 und/oder von der Koppelachse 58 und/oder von der Antriebsachse 52 beabstandet. Das in die Führungskulisse 40 und in die Koppelkulisse 46 eingreifende, insbesondere die Führungskulisse 40 und/oder die Koppelkulisse 46 durchdringende, Koppelelement 44 ist bei der zweiten Ausführungsform an dem Verkleidungselement 24 gehalten und somit mit dem Verkleidungselement 24, insbesondere um die zweite Schwenkachse S2, relativ zu dem Verkleidungselement 28 mit verschwenkbar. Somit ist das Verkleidungselement 24 beispielsweise mittels der Führungskulisse 40 und mittels des Koppelelements 44 zwangsgeführt, insbesondere zumindest beim Verschwenken des Verkleidungselements 24 beziehungsweise der Verkleidungselemente 22 und 24. Beim Verschwenken des Verkleidungselements 24 wird das Koppelelement 44 in und entlang der Führungskulisse 40 und in und entlang der Koppelkulisse 46 verschoben. Dadurch nimmt das Koppelelement 44 das Verkleidungselement 22 dann, wenn das Verkleidungselement 24 über die Koppeln 54 und 56 und über die Antriebswelle 50 von dem Motor 48 angetrieben und somit verschwenkt wird, mit, so dass in der Folge das Verkleidungselement 22 mit dem Verkleidungselement 24 mit verschwenkt wird. Hierdurch werden die Verkleidungselemente 22 und 24, insbesondere zumindest teilweise gemeinsam beziehungsweise gleichzeitig, verschwenkt. Wie bei der ersten Ausführungsform verschwenken die Verkleidungselemente 22 und 24 auch bei der zweiten Ausführungsform gegen- beziehungsweise widersinnig, wenn sie aus der Verkleidungsstellung V in die Komfortstellung K beziehungsweise umgekehrt aus der Komfortstellung K in die Verkleidungsstellung V verschwenkt werden. Hierdurch kann ein besonders einfacher und bauraumgünstiger Aufbau realisiert werden.

## Patentansprüche

1. Verkleidungseinrichtung für einen Seitenschweller (16) eines Personenkraftwagens, mit einer Schwellerverkleidung (20), welche ein in einem Längenbereich (L) des Seitenschwellers (16) unterhalb einer Türöffnung (18) angeordnetes erstes Verkleidungselement (22) und ein in dem Längenbereich (L) unterhalb der Türöffnung (18) angeordnetes zweites Verkleidungselement (24) umfasst, und mit einer Antriebseinheit (A), mittels welcher das erste Verkleidungselement (22) um eine erste Schwenkachse (S1) und das zweite Verkleidungselement (24) um eine von der ersten Schwenkachse (S1) beabstandete und parallel zur ersten Schwenkachse (S1) verlaufende, zweite Schwenkachse (S2) relativ zu dem Seitenschweller (16) zwischen einer Verkleidungsstellung (V) und einer Komfortstellung (K) verschwenkbar ist, **dadurch gekennzeichnet, dass**
die Antriebseinheit (A) als ein Spindelantrieb (30) ausgebildet ist, welcher einen den Verkleidungselementen (22, 24) gemeinsamen Motor (34), eine den Verkleidungselementen (22, 24) gemeinsame und mittels des Motors (34) drehbare Spindel (32) und ein den Verkleidungselementen (22, 24) gemeinsames und auf die Spindel (32) aufgeschraubtes Mitnehmerelement (36) umfasst, welches durch relativ zu dem Mitnehmerelement (36) erfolgendes Drehen der Spindel (32) entlang der Spindel (32) verschiebbar ist, wodurch die Verkleidungselemente (22, 24) verschwenkbar sind.

2. Verkleidungseinrichtung nach Anspruch 1,
**dadurch gekennzeichnet, dass**
die Spindel (32) um eine Drehachse (S3) relativ zu dem Seitenschweller (16) mit den Verkleidungselementen (22, 24) mit verschwenkbar ist.

3. Verkleidungseinrichtung nach Anspruch 2,
**dadurch gekennzeichnet, dass**
die Drehachse (S3) von den Schwenkachsen (S1, S2), insbesondere in Fahrzeugquerrichtung und/oder in Fahrzeughochrichtung, beabstandet ist.

4. Verkleidungseinrichtung nach Anspruch 2 oder 3,
**dadurch gekennzeichnet, dass**
auch der Motor (34) um die Drehachse (S3) relativ zu dem Seitenschweller (16) mit den Verkleidungselementen (22, 24) und mit der Spindel (32) mit verschwenkbar ist.

5. Verkleidungseinrichtung nach einem der Ansprüche 2 bis 4,
**gekennzeichnet durch**
eine Führungskulisse (40), mittels welcher das Mitnehmerelement (36) und über dieses die Spindel (32) bei dem entlang der Spindel (32) erfolgenden Verschieben des Mitnehmerelements (36) zwangsgeführt ist, wodurch aus dem entlang der Spindel (32) erfolgenden Verschieben des Mitnehmerelements (36) das Verschwenken der Spindel (32) um die Drehachse (S3) resultiert.

6. Verkleidungseinrichtung nach einem der vorhergehenden Ansprüche,
**gekennzeichnet durch**
ein mit dem Mitnehmerelement (36) mit verschiebbares Koppelelement (44), welches mit einem der Verkleidungselemente (22, 24) gekoppelt ist und eine korrespondierende Koppelkulisse (46) des anderen Verkleidungselements (22) durchdringt, wodurch auch das andere Verkleidungselement (22) mit dem Koppelelement (44) gekoppelt ist und die Verkleidungselemente (22, 24) über das Koppelelement (44) durch entlang der Spindel (32) erfolgendes Verschieben des Mitnehmerelements (36) verschwenkbar sind.

7. Verkleidungseinrichtungen nach den Ansprüchen 5 und 6,
**dadurch gekennzeichnet, dass**
die Führungskulisse (40) und die Koppelkulisse (46) voneinander getrennte und entlang der jeweiligen Schwenkachse (S1, S2) nebeneinander angeordnete Kulissen sind, wobei das Koppelelement (44) auch die Führungskulisse (40) durchdringt, wodurch das Mitnehmerelement (36) über das Koppelelement (44) mittels der Führungskulisse (40) zwangsgeführt ist.

8. Verkleidungseinrichtung nach einem der vorhergehenden Ansprüche,
**dadurch gekennzeichnet, dass**
die Verkleidungselemente (22, 24) gegensinnig zwischen der Verkleidungsstellung (V) und der Komfortstellung (K) verschwenkbar sind.

9. Verkleidungseinrichtung nach einem der vorhergehenden Ansprüche,
**dadurch gekennzeichnet, dass**
die Schwenkachsen (S1, S2) in Fahrzeughochrichtung voneinander beabstandet sind.

## Claims

1. Cover device for a side sill (16) of a passenger vehicle, comprising a sill cover (20) which comprises a first cover element (22) arranged in a length region (L) of the side sill (16) underneath a door opening (18) and a second cover element (24) arranged in the length region (L) underneath the door opening (18), and comprising a drive unit (A) by means of which the first cover element (22) is pivotable about a first pivot axis (S1) and the second cover element (24) is pivotable about a second pivot axis (S2), which is spaced apart from the first pivot axis (S1) and extends in parallel with the first pivot axis (S1), relative to the side sill (16) between a cover position (V) and a comfort position (K),
**characterized in that**
the drive unit (A) is designed as a spindle drive (30) which comprises a motor (34) common to the cover elements (22, 24), a spindle (32) which is common to the cover elements (22, 24) and is rotatable by means of the motor (34), and a driver element (36) which is common to the cover elements (22, 24) and is screwed onto the spindle (32), which driver element can be moved along the spindle (32) by rotating the spindle (32) relative to the driver element (36), as a result of which the cover elements (22, 24) can be pivoted.

2. Cover device according to claim 1,
**characterized in that**
the spindle (32) can be pivoted about an axis of rotation (S3) relative to the side sill (16) together with the cover elements (22, 24).

3. Cover device according to claim 2,
**characterized in that**
the axis of rotation (S3) is spaced apart from the pivot axes (S1, S2), in particular in the vehicle transverse direction and/or in the vehicle vertical direction.

4. Cover device according to claim 2 or claim 3,
**characterized in that**
the motor (34) can also be pivoted about the axis of rotation (S3) relative to the side sill (16) together with the cover elements (22, 24) and with the spindle (32).

5. Cover device according to any of claims 2 to 4,
**characterized by**
a guide slot (40) by means of which the driver element (36) and, via this, the spindle (32) are forcibly guided when the driver element (36) is moved along the spindle (32), by which the pivoting of the spindle (32) about the axis of rotation (S3) results from the movement of the driver element (36) along the spindle (32).

6. Cover device according to any of the preceding claims,
**characterized by**
a coupling element (44) which can be moved together with the driver element (36) and which is coupled to one of the cover elements (22, 24) and penetrates a corresponding coupling slot (46) of the other cover element (22), as a result of which the other cover element (22) is also coupled to the coupling element (44), and the cover elements (22, 24) can be pivoted via the coupling element (44) by movement of the driver element (36) along the spindle (32).

7. Cover devices according to claims 5 and 6,
**characterized in that**
the guide slot (40) and the coupling slot (46) are separate slots arranged next to one another along the relevant pivot axis (S1, S2), the coupling element (44) also penetrating the guide slot (40), as a result of which the driver element (36) is forcibly guided via the coupling element (44) by means of the guide slot (40).

8. Cover device according to any of the preceding claims,
**characterized in that**
the cover elements (22, 24) can be pivoted in opposite directions between the cover position (V) and the comfort position (K).

9. Cover device according to any of the preceding claims,
**characterized in that**
the pivot axes (S1, S2) are spaced apart from one another in the vehicle vertical direction.

## Revendications

1. Dispositif de revêtement pour un bas de caisse latéral (16) d'une voiture de tourisme, comportant un revêtement de bas de caisse (20) qui comprend un premier élément de revêtement (22) disposé dans une zone longitudinale (L) du bas de caisse latéral (16) sous une portière (18) et un second élément de revêtement (24) disposé dans la zone longitudinale (L) sous la portière (18), et comportant une unité d'entraînement (A) à l'aide de laquelle le premier élément de revêtement (22) peut pivoter autour d'un premier axe de pivotement (S1) et le second élément de revêtement (24) peut pivoter autour d'un second axe de pivotement (S2) espacé du premier axe de pivotement (S1) et s'étendant parallèlement au premier axe de pivotement (S1), lesquels pivotements sont effectués par rapport au bas de caisse latéral (16), entre une position de revêtement (V) et une position de confort (K),
**caractérisé en ce que**
l'unité d'entraînement (A) est réalisée sous la forme d'un entraînement à broche (30) qui comprend un moteur (34) commun aux éléments de revêtement (22, 24), une broche (32) commune aux éléments de revêtement (22, 24) et pouvant être mise en rotation à l'aide du moteur (34), et un élément d'entraînement (36) commun aux éléments de revêtement (22, 24) et vissé sur la broche (32), lequel élément d'entraînement peut être déplacé le long de la broche (32) par la rotation de la broche (32) s'effectuant par rapport à l'élément d'entraînement (36), moyennant quoi les éléments de revêtement (22, 24) peuvent pivoter.

2. Dispositif de revêtement selon la revendication 1,
**caractérisé en ce que**
la broche (32) peut pivoter avec les éléments de revêtement (22, 24) autour d'un axe de rotation (S3) par rapport au bas de caisse latéral (16).

3. Dispositif de revêtement selon la revendication 2,
**caractérisé en ce que**
l'axe de rotation (S3) est espacé des axes de pivotement (S1, S2), en particulier dans la direction transversale de véhicule et/ou dans la direction verticale de véhicule.

4. Dispositif de revêtement selon la revendication 2 ou 3,
**caractérisé en ce que**
le moteur (34) peut également pivoter avec les éléments de revêtement (22, 24) et avec la broche (32) autour de l'axe de rotation (S3) par rapport au bas de caisse latéral (16).

5. Dispositif de revêtement selon l'une des revendications 2 à 4,
**caractérisé par**
une coulisse de guidage (40) à l'aide de laquelle l'élément d'entraînement (36) et, par l'intermédiaire de celui-ci, la broche (32) sont guidés par force lors du déplacement de l'élément d'entraînement (36) s'effectuant le long de la broche (32), moyennant quoi le pivotement de la broche (32) autour de l'axe de rotation (S3) résulte du déplacement de l'élément d'entraînement (36) s'effectuant le long de la broche (32).

6. Dispositif de revêtement selon l'une des revendications précédentes,
**caractérisé par**
un élément d'accouplement (44) pouvant être déplacé avec l'élément d'entraînement (36), lequel élément d'accouplement est accouplé à l'un des éléments de revêtement (22, 24) et traverse une coulisse d'accouplement (46) correspondante de l'autre élément de revêtement (22), moyennant quoi l'autre élément de revêtement (22) est également accouplé à l'élément d'accouplement (44) et les éléments de revêtement (22, 24) peuvent pivoter, par l'intermédiaire de l'élément d'accouplement (44), par le déplacement de l'élément d'entraînement (36) s'effectuant le long de la broche (32).

7. Dispositif de revêtement selon les revendications 5 et 6,
**caractérisé en ce que**
la coulisse de guidage (40) et la coulisse d'accouplement (46) sont des coulisses disposées séparément l'une de l'autre et côte à côte le long des axes de pivotement (S1, S2) respectifs, dans lequel l'élément d'accouplement (44) traverse également la coulisse de guidage (40), moyennant quoi l'élément d'entraînement (36) est guidé par force à l'aide de la coulisse de guidage (40) par l'intermédiaire de l'élément d'accouplement (44).

8. Dispositif de revêtement selon l'une des revendications précédentes,
**caractérisé en ce que**
les éléments de revêtement (22, 24) peuvent pivoter en sens inverse entre la position de revêtement (V) et la position de confort (K).

9. Dispositif de revêtement selon l'une des revendications précédentes,
**caractérisé en ce que**
les axes de pivotement (S1, S2) sont espacés l'un de l'autre dans la direction verticale de véhicule.
